(19) Europäisches Patentamt / European Patent Office / Office européen des brevets

(11) **EP 4 538 059 A1**

(12) **EUROPEAN PATENT APPLICATION**
published in accordance with Art. 153(4) EPC

(43) Date of publication:
**16.04.2025 Bulletin 2025/16**

(21) Application number: **23826742.1**

(22) Date of filing: **09.03.2023**

(51) International Patent Classification (IPC):
***B60C 11/00*** (2006.01) ***B60C 1/00*** (2006.01)
***B60C 11/03*** (2006.01) ***C08F 236/10*** (2006.01)
***C08K 3/36*** (2006.01) ***C08L 9/06*** (2006.01)

(52) Cooperative Patent Classification (CPC):
**B60C 1/00; B60C 11/00; B60C 11/03; C08F 236/10; C08K 3/36; C08L 9/06**

(86) International application number:
**PCT/JP2023/008974**

(87) International publication number:
**WO 2023/248553 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.06.2022 JP 2022101528**

(71) Applicant: **SUMITOMO RUBBER INDUSTRIES, LTD.**
**Kobe-shi, Hyogo 651-0072 (JP)**

(72) Inventors:
- **SUZUKI, Yumi**
  **Kobe-shi, Hyogo 651-0072 (JP)**
- **NAKAMURA, Kentaro**
  **Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(54) **TIRE**

(57) The present invention improves steering stability during high-speed running, especially response at corner entry. The tire according to the present invention includes a tread, wherein a cap rubber layer as a part of the tread is made of a rubber composition which contains a styrene/butadiene rubber (SBR) having a styrene content of 25 % by mass or less in an amount of 80-100 parts by mass per 100 parts by mass of the rubber component, contains silica in an amount of 100 parts by mass or smaller per 100 parts by mass of the rubber component, and has a complex elastic modulus (30°CE*), as determined under the conditions of a temperature of 30°C, a frequency of 10 Hz, an initial strain of 5%, and a dynamic strain rate of 1% in the tensile deformation mode, of above 8.0 MPa. The tread has a thickness of 8.5 mm or less.

EP 4 538 059 A1

## Description

[TECHNICAL FIELD]

The present invention relates to a tire.

[Background Art]

From the standpoint of safety, tires are required to have excellent driving stability.
Therefore, various techniques have been proposed to improve the driving stability, for example, by improving the grip performance (for example, Patent Documents 1 to 4).

[PRIOR ART DOCUMENTS]

[PATENT DOCUMENT]

[Patent Document 1] JP 2011-93386 A
[Patent Document 2] JP 2013-79017 A
[Patent Document 3] JP 2014-133845 A
[Patent Document 4] JP 2016-37100 A

[SUMMARY OF INVENTION]

[PROBLEM TO BE SOLVED BY THE INVENTION]

However, with the construction of expressways in recent years, it is not uncommon for people to travel long distances on expressways. In this situation, there is a strong demand for the above-mentioned conventional technology to further improve the steering stability during high-speed running, in particular the responsiveness when entering a corner.
An object of the present invention is to improve the driving stability during high-speed running, in particular the responsiveness when entering a corner.

[MEANS FOR SOLVING THE PROBLEM]

The present invention is;

a tire having a tread portion, wherein
a cap rubber layer forming the tread portion is formed from a rubber composition which contains a styrene-butadiene rubber (SBR) having a styrene content of 25% by mass or less in an amount of 80 parts by mass or more and 100 parts by mass or less per 100 parts by mass of the rubber component, and contains silica in an amount of 100 parts by mass or less based on 100 parts by mass of the rubber component;
the rubber composition has a complex modulus (30°C E*) of more than 8.0 MPa as measured under the conditions of a temperature of 30°C, a frequency of 10 Hz, an initial strain of 5%, and a dynamic strain rate of 1%, in a deformation mode of tension; and
the thickness of the tread portion is 8.5 mm or less.

[THE EFFECT OF THE INVENTION]

According to the present invention, it is possible to improve the driving stability during high-speed running, and in particular, the responsiveness when entering a corner.

[EMBODIMENTS FOR CARRYING OUT THE INVENTION]

[1] Characteristics of the tire according to the present invention

First, the characteristics of the tire according to the present invention will be described.

1. Overview

The tire according to the present invention comprises

a member including a fiber material or the like, such as a carcass, which is bridged between one of a pair of bead portions that are engaged with a rim and form the framework of the tire, a belt layer, a belt reinforcing layer, and other components, and
a tread portion provided radially outward of these components.

The tread portion comprises a cap rubber layer that is provided radially outward of the tire and forms a ground contact surface, and, if necessary, a base rubber layer that is provided radially inward of the cap rubber layer.
The cap rubber layer forming the tread portion is formed from a rubber composition containing 80 parts by mass or more and 100 parts by mass or less of styrene butadiene rubber (SBR) with a styrene content of 25 % by mass or less per 100 parts by mass of the rubber component, and containing 100 parts by mass or less of silica per 100 parts by mass of the rubber component. Complex modulus (30°C E*) of this rubber composition, measured under the conditions of a temperature of 30°C, a frequency of 10 Hz, an initial strain of 5%, and a dynamic strain rate of 1%, in a deformation mode of tension, is more than 8.0 MPa. The thickness of the tread portion is 8.5 mm or less.
The cap rubber layer referred to here is not limited to the rubber layer that forms the outermost layer of the tread portion, and in the case where there are two or more layers within 5 mm from the tread surface toward the inside, at least one of the layers must satisfy the requirements of the rubber composition.
These characteristics make it possible to improve the driving stability during high-speed running, and in particular the responsiveness when entering a corner, as will be described later.

2. Mechanism of the effect of the tire according to the present invention

The mechanism by which the above-mentioned effects are exhibited in the tire according to the present invention is considered as follows.

(1) Low styrene SBR content

As described above, the cap rubber layer of the tire according to the present invention is formed from a rubber composition containing 80 parts by mass or more and 100 parts by mass or less of SBR having a styrene content of 25% by mass or less per 100 parts by mass of the rubber component.
Since SBR with a low styrene content, specifically, with a styrene content of 25 % by mass or less, has a low glass transition temperature (Tg), by containing 80 parts by mass or more and 100 parts by mass or less of such SBR per 100 parts by mass of the rubber component and forming the majority of the cap rubber layer, the Tg of the entire rubber composition can be lowered and the mobility of the polymer can be increased. As a result, it is considered that the road surface conformance is improved and steering stability during high-speed running, particularly responsiveness when entering corners, is improved.
Furthermore, SBR with a low styrene content forms tiny styrene domains within the rubber matrix, and when input is applied from the road surface, heat generation is easily generated due to friction in the domains, which is considered to improve the road surface conformance and to improve steering stability during high-speed running, particularly responsiveness when entering corners.
In the present invention, the styrene content is more preferably 20% by mass or less, and further preferably 15% by mass or less, while the lower limit is preferably 3% by mass or more, more preferably 5% by mass or more, and further preferably 8% by mass or more.
The phrase "containing 80 parts by mass or more of SBR with a styrene content of 25% by mass or less per 100 parts by mass of the rubber component" means that the amount of SBR per 100 parts by mass of the rubber component is 80 parts by mass or more, and the amount of styrene in the entire SBR is 25% by mass or less.
In other words, when the rubber component contains only one styrene-containing polymer (SBR), it indicates that the styrene amount is 25 % by mass or less, and when the rubber component contains multiple styrene-containing polymers (SBR), it indicates that the styrene amount calculated by the sum of the product of the styrene amount (% by mass) in each polymer and the blending amount (parts by mass) of that polymer per 100 parts by mass of the rubber component is 25 % by mass or less.
More specifically, when 100 parts by mass of the rubber component contains X1 parts by mass of SBR1 having a styrene amount S1% by mass and X2 parts by mass of SBR2 having a styrene amount S2% by mass, the amount of styrene is calculated from the formula $\{(S1\times X1) + (S2\times X2)\}/(X1+X2)$ is 25% by mass or less.
In addition, in the rubber composition after vulcanization, the amount of styrene can also be calculated by

determining the amount of styrene contained in the rubber component after acetone extraction using solid-state nuclear magnetic resonance (solid-state NMR) or a Fourier transform infrared spectrophotometer (FTIR).

In the present invention, the amount of SBR per 100 parts by mass of the rubber component is more preferably 85 parts by mass or more, and further preferably 90 parts by mass or more.

(2) Silica content

In the cap rubber layer of the tire according to the present invention, the content of silica is 100 parts by mass or less per 100 parts by mass of the rubber component, which is an amount that does not exceed the rubber component. This makes it easier for the silica to be uniformly dispersed in the rubber matrix, making the rubber composition uniform and improving the road surface conformance. In addition, a silica network is easily formed in the rubber matrix, so that the rubber reinforcement is sufficiently obtained and the force transmission inside the tire is improved. As a result, it is considered that the steering stability during high-speed running, especially the responsiveness when entering a corner, is improved.

In the present invention, the content of silica is more preferably 98 parts by mass or less per 100 parts by mass of the rubber component, while the lower limit is preferably 75 parts by mass or more, more preferably 80 parts by mass or more, and further preferably 90 parts by mass or more, in consideration of reinforcing properties of the rubber.

(3) Complex modulus of elasticity (30°C E*)

In the present invention, complex modulus of elasticity (30°C E*) of the rubber composition forming the cap rubber layer, measured at a temperature of 30°C, a frequency of 10 Hz, an initial strain of 5%, a dynamic strain rate of 1%, and a deformation mode of tension, is more than 8.0 MPa.

The complex modulus is a parameter indicating the rigidity of a rubber layer. By making the 30°C E* exceed 8.0 MPa, the rigidity of the entire rubber can be improved. Therefore, it is considered that a large reaction force is exerted from a macroscopic viewpoint, and the steering stability during high-speed running, in particular, the responsiveness when entering a corner, is improved.

In the present invention, the 30°C E* is more preferably 8.1 MPa or more, further preferably 8.3 MPa or more, further preferably more than 8.5 MPa, further preferably 8.7 MPa or more, further preferably 8.8 MPa or more, further preferably more than 9.0 MPa, and further preferably 9.2 MPa or more. On the other hand, in consideration of the exertion of moderate conformance, the upper limit is preferably 11.0 MPa or less, more preferably 10.0 MPa or less, further preferably 9.5 MPa or less, and further preferably 9.4 MPa or less.

Here, the "complex elastic modulus" can be measured using a viscoelasticity measuring device such as "Eplexor (registered trademark)" manufactured by GABO Corporation.

The complex modulus (30°C E*) of the rubber layer can be appropriately adjusted by mixing the materials described below. Specifically, it can be adjusted by increasing the ratio of fillers such as silica and carbon black, decreasing the amount of plasticizer components such as oil, increasing the amount of resin components, or increasing the amount of vulcanizing agent such as sulfur and accelerators.

(4) Tread thickness

Furthermore, in the tire according to the present invention, the thickness of the tread portion is made thin, at 8.5 mm or less, which is considered to further improve the rigidity of the tread portion, increase the force transmission inside the tire, and increase the rigidity in the shear direction, thereby improving the steering stability during high-speed running, particularly the responsiveness when entering corners.

In the present invention, the thickness of the tread portion is more preferably 8.0 mm or less, while the lower limit is preferably 7.0 mm or more, and more preferably 7.5 mm or more.

In the present invention, the tread portion is a member in the region that forms the contact surface of the tire, and refers to the portion radially outward of members containing fiber materials such as the carcass, belt layer, and belt reinforcing layer.

The "thickness of the tread" refers to the thickness of the tread on the tire equatorial plane in the tire radial cross section. When the tread is formed of a single rubber composition, it is the thickness of the rubber composition. When the tread is formed of a layered structure of multiple rubber compositions described below, it is the total thickness of these layers. When the tire has grooves on the tire equatorial plane, it refers to the thickness from the intersection of a straight line connecting the outermost end points of the grooves in the tire radial direction with the tire equatorial plane to the interface of the tread at the innermost part in the tire radial direction. The thickness of the tread can be measured by adjusting the bead part to the standardized rim width in a cross section cut out in the radial direction of the tire.

In the above description, the "standardized rim" is a rim defined for each tire in the standard system including the

standard on which the tire is based. For example, in the case of JATMA (Japan Automobile Tire Association), it is the standard rim in applicable sizes described in the "JATMA YEAR BOOK", in the case of "ETRTO (The European Tire and Rim Technical Organization)", it is "Measuring Rim" described in "STANDARDS MANUAL", and in the case of TRA (The Tire and Rim Association, Inc.), it is "Design Rim" described in "YEAR BOOK ". Reference is made in the order of JATMA, ETRTO, and TRA, and if there is an applicable size at the time of reference, that standard is followed. In the case of tires that are not specified in the standard, it refers a rim that can be assembled and can maintain internal pressure, that is, the rim that does not cause air leakage from between the rim and the tire, and has the smallest rim diameter, and then the narrowest rim width.

As described above, in the tire according to the present invention, the effects shown in (1) to (4) work together to suppress slippage with the road surface due to the microscopic mobility, high heat generation, and conformance of the rubber matrix itself,

and at the same time, from a macroscopic point of view, it is possible to obtain the ease of generating a reaction force due to appropriate rigidity and ease of force transmission, so that the tire has excellent responsiveness when turning the steering angle to enter a corner while running at high speed, and it is considered that the steering stability during high-speed running is improved.

[2] More preferred embodiments of the tire according to the present invention

The tire according to the present invention can achieve even greater effects by adopting the following aspects.

1. Loss tangent of the cap rubber layer at 30°C (30°Ctan δ)

In the present invention, the rubber composition forming the cap rubber layer preferably has a loss tangent (30°C tan δ) measured in a deformation mode: tensile under conditions of a temperature of 30°C, a frequency of 10 Hz, an initial strain of 5%, and a dynamic strain rate of 1%, of 0.26 or less, more preferably 0.25 or less, further preferably 0.24 or less, further preferably 0.22 or less, further preferably 0.21 or less, and further preferably 0.20 or less.

The loss tangent (tan δ) can be considered as a parameter that indicates the phase difference between the input and response of the rubber, and by reducing the loss tangent at the frequency/temperature corresponding to the rolling motion, i.e., 30°C tan δ, to 0.25 or less, the phase difference between the input and response is reduced and the responsiveness is improved, which is considered to further improve the steering stability during high-speed running. The lower limit is not particularly limited, but is preferably 0.15 or more, more preferably 0.16 or more, and further preferably 0.18 or more.

Here, the "loss tangent (tan δ)" can be measured using a viscoelasticity measuring device such as "Eplexor (registered trademark)" manufactured by GABO Corporation, in the same manner as in the measurement of the "complex elastic modulus" described above.

In addition, the 30°C tan δ can be appropriately adjusted by mixing the ingredients described below, and can be lowered by reducing the styrene content in the SBR component, reducing the resin component, reducing the amount of filler such as silica or carbon black, or increasing the amount of sulfur or vulcanization accelerator.

2. Multi-layered tread

In the present invention, the tread portion may be formed of only one layer of a cap rubber layer provided on the outer side in the tire radial direction, or may be formed of two layers by providing a base rubber layer on the inner side in the tire radial direction of the cap rubber layer, or may be formed of three layers, or may be formed of four layers or more. In this case, the thickness of the cap rubber layer in the entire tread portion is preferably 10% or more. This makes it possible to generate sufficient friction between the tread portion surface and the road surface during high-speed running, thereby enabling sufficient transmission of frictional force to the inside of the tire, which is considered to further improve steering stability during high-speed running. More preferably, it is 70% or more.

As described above, in the case where the tire is formed of a layered structure of a plurality of rubber compositions, the "thickness of the tread portion" refers to the total thickness of the stacked layers. In the case where the tire has grooves on the equatorial plane of the tire, the "thickness of the tread portion" refers to the thickness from the intersection of the straight line connecting the outermost end points of the grooves in the radial direction of the tire with the equatorial plane of the tire to the interface of the innermost part in the radial direction of the tire of the tread portion.

The "thickness of the cap rubber layer" refers to the thickness of the cap rubber layer on the tire equatorial plane in the tire radial cross section, and when the tire has grooves on the tire equatorial plane, refers to the thickness from the intersection of a straight line connecting the radially outermost end points of the grooves with the tire equatorial plane to the interface with the base rubber layer at the innermost part of the tread in the tire radial direction. The "thickness of the base rubber layer" refers to the thickness from the interface with the cap rubber layer to the interface of innermost part of the

tread in the tire radial direction.

The thickness of the cap rubber layer and the thickness of the base rubber layer can be calculated by determining the thickness of the cap rubber layer and the thickness of the base rubber layer in the thickness of the tread portion, as described above. When a groove exists on the tire equatorial plane, the thickness of the cap rubber layer and the thickness of the base rubber layer can be calculated by calculating the thickness of the cap rubber layer and the thickness of the base rubber layer in the center of the land portion of the tread portion closest to the equatorial plane.

In the case of a multi-layered tread portion, it is preferable that the 30°Ctan δ of the base rubber layer is smaller than that of the cap rubber layer, which is considered to improve responsiveness by reducing the phase difference until the response inside the tire occurs with respect to the grip performance generated by the cap rubber layer, thereby improving steering stability during high-speed running.

In addition, it is preferable that the 30°CE* of the base rubber layer is smaller than the 30°CE* of the cap rubber layer. This makes it easier for deformation to occur inside the tread portion, and makes it easier for the entire tread surface to come into contact with the road surface, which is considered to facilitate further improvement of steering stability during high-speed running.

The 30°CE* and 30°Ctan δ of the base rubber layer can be adjusted in the same manner as the cap rubber layer described above.

3. Particle size of silica contained in the cap rubber layer

In the present invention, the particle size (average primary particle size) of the silica contained in the cap rubber layer is preferably 17 nm or less from the viewpoint of improving reinforcing properties.

The average primary particle diameter can be calculated by directly observing silica particles extracted from a rubber composition cut out from a tire using a transmission electron microscope (TEM) or the like, calculating the equivalent cross-sectional area diameter from the area of each silica particle obtained, and calculating the average value.

4. Resin component content in the cap rubber layer

In the present invention, the rubber composition forming the cap rubber layer preferably contains a resin component.

It is considered that by containing a resin component in the rubber composition, the adhesiveness of the resin component ensures grip on the road surface even during high-speed running, thereby further improving steering stability during high-speed running.

Preferred resin components include rosin-based resins, styrene-based resins, coumarone-based resins, terpene-based resins, C5 resins, C9 resins, C5C9 resins, and acrylic resins, which will be described later, and among these, styrene-based resins such as α-methylstyrene are more preferred. The content per 100 parts by mass of the rubber component is preferably 20 parts by mass or more, more preferably 25 parts by mass or more, further preferably 30 parts by mass or more, and further preferably 35 parts by mass or more. In consideration of the softening of the rubber, the upper limit is preferably 50 parts by mass or less, more preferably 45 parts by mass or less, and further preferably 40 parts by mass or less.

5. Acetone extractables (AE) of the cap rubber layer

In the present invention, from the viewpoint of exhibiting excellent steering stability by stable grip performance during high-speed running, the acetone extractables (AE) of the cap rubber layer is preferably 10% by mass or more, more preferably 12% by mass or more, further preferably 13.4% by mass or more, further preferably 14% by mass or more, further preferably 14.5% by mass or more, and further preferably 16% by mass or more. On the other hand, the upper limit is preferably 23% by mass or less, more preferably 20% by mass or less, further preferably 19% by mass or less, further preferably 18.3% by mass or less, and further preferably 18% by mass or less.

The acetone extractables (AE) can be considered as an index showing the amount of softeners in the rubber composition, and can also be considered as an index showing the mobility of the molecular chain of the rubber composition. Therefore, by appropriately controlling the amount of AE in the cap rubber layer, the tire can have a sufficient contact area with the road surface during high-speed running, thereby exhibiting stable grip performance and excellent steering stability during high-speed running.

The acetone extractables (AE) can be measured in accordance with JIS K 6229: 2015. Specifically, a vulcanized rubber test piece cut out from a measurement site is immersed in acetone at room temperature and normal pressure for 72 hours, and the mass loss rate (%) of the test piece is determined, thereby obtaining the AE (% by mass).

More specifically, each vulcanized rubber test piece is immersed in acetone for 72 hours at room temperature and normal pressure to extract the soluble components, and the mass of each test piece before and after extraction is

measured, and the acetone extractables (AE) can be calculated according to the following formula.

Acetone extractable (%) = {(mass of rubber test piece before extraction - mass of rubber test piece after extraction) / (mass of rubber test piece before extraction)} × 100

The acetone extractables can be appropriately changed by changing the compounding ratio of the plasticizer in the rubber composition.

6. Land Ratio

In the tire according to the present invention, when mounted on a standardized rim and under standardized internal pressure, the land ratio in the tread portion of the tire is preferably 55% or more, more preferably 60% or more, further preferably 63% or more, further preferably 65% or more, and further preferably 68% or more.

"Land ratio" is the ratio of the actual contact area to a hypothetical contact area in which all grooves on the surface of the tread are filled. A larger land ratio means a larger area in contact with the road surface, which results in sufficient and stable grip performance and excellent steering stability.

The upper limit of the land ratio is not particularly limited, but is preferably 85% or less, more preferably 80% or less, and further preferably 75% or less.

The land ratio can be determined from the ground contact shape under standardized rim, standardized internal pressure, and standardized load conditions.

Specifically, the tire is mounted on a standardized rim, the standardized internal pressure is applied, and the tire is left at rest for 24 hours at 25°C. Then, the tire tread surface is painted with ink, and the standardized load is applied and pressed against cardboard (camber angle is 0°), and the contact shape is transferred to the cardboard. The tire is rotated 72° in the circumferential direction and the contact shape is transferred at five places. That is, the contact shape is obtained five times. At this time, the parts of the five contact shapes that are interrupted by the grooves in the contour of the contact shape are smoothly connected, and the obtained shape is called the virtual contact surface.

The land ratio can be calculated by (average area of five contact shapes (black portions) transferred to cardboard / average area of virtual contact surfaces obtained from the five contact shapes) ×100(%).

The "standardized internal pressure" refers to the air pressure specified for each tire by the above standard, and in the case of JATMA, it refers to the maximum air pressure, in the case of ETRTO, it refers to the "INFLATION PRESSURE" table, and in the case of TRA, it refers to the maximum value listed in the table "TIRE LOAD LIMITS AT VARIOUS COLD INFLATION PRESSURES". As in the case of "standardized rim", it refers to JATMA, ETRTO, TRA in that order and follows the standards. In the case of a tire not specified in the standard, it refers to the standardized internal pressure (250 KPa or more) of another tire size (specified in the standard) that is specified with the standardized rim as the standard rim. In the case where multiple standardized internal pressures of 250 KPa or more are specified, it refers to the minimum value among them.

The "standardized load" is the load determined for each tire by each standard in the standard system including the standard on which the tire is based, and refers to the maximum mass that can be loaded on the tire. In the case of JATMA, it refers to the maximum load capacity, in the case of ETRTO, it refers to the "LOAD CAPACITY", and in the case of TRA, it refers to the maximum value described in the table "TIRE LOAD LIMITS AT VARIOUS COLD INFLATION PRESSURES". As in the case of the "standardized rim" and "standardized internal pressure" described above, JATMA, ETRTO, and TRA are referred to in that order and their standards are followed. In the case of a tire not determined by a standard, the standardized load $W_L$ is calculated as follows.

$$V = \{(Dt/2)^2 - (Dt/2-Ht)^2\} \times \pi \times Wt$$

$$W_L = 0.000011 \times V + 175$$

$W_L$: Standardized load (kg)
V: Virtual volume of the tire ($mm^3$)
Dt: Tire outer diameter Dt (mm)
Ht: Tire section height (mm)
Wt: Tire section width (mm)

7. Relationship between land ratio of tread portion and 30°CE* of cap rubber layer

In the tire according to the present invention, the product of the land ratio R (%) in the tread portion and the complex modulus E* (MPa) of the cap rubber layer at 30°C is preferably 527 or more, more preferably 540 or more, and further preferably 560 or more. As described above, the land ratio is the contact area ratio of the tread portion, and it is considered that by making the product of this area ratio and the 30°CE* of the cap rubber layer 560 or more, the rigidity of the tread portion is improved, and it is possible to easily improve the steering stability during high-speed running.

The product of the land ratio R and the 30°CE* of the cap rubber layer is more preferably 566 or more, further preferably 572 or more, further preferably 580 or more, further preferably 598 or more, further preferably 600 or more, further preferably 611 or more, further preferably 617.5 or more, and further preferably 626 or more. On the other hand, the upper limit is not particularly limited, but is preferably 800 or less, more preferably 750 or less, and further preferably 700 or less.

8. Relationship between tread thickness and 30°CE* of cap rubber layer

In the tire according to the present invention, the ratio of 30°CE* of cap rubber layer to the thickness G (mm) of the tread portion (30°CE* / G) is preferably 0.95 or more, more preferably 0.98 or more, and further preferably 1.00 or more. It is considered that the larger the thickness G of the tread portion, the larger the deformation occurring in the tread portion during cornering, and the lower the responsiveness. Therefore, it is considered that the rigidity of the tread portion is ensured and good responsiveness can be exhibited by making the 30°CE* of the cap rubber layer sufficiently high relative to the thickness G of the tread portion.

The 30°CE* / G is more preferably 1.02 or more, further preferably 1.04 or more, further preferably 1.05 or more, further preferably 1.08 or more, further preferably 1.10 or more, further preferably 1.11 or more, further preferably 1.12 or more, and further preferably 1.15 or more. There is no particular upper limit, but it is preferably 3.00 or less, more preferably 2.50 or less, and further preferably 2.00 or less.

9. Aspect ratio

Aspect ratio is the ratio of the cross-sectional height to the cross-sectional width of the tire, and the smaller this ratio is, the smaller the proportion of the part that deforms in the tire width direction relative to the friction obtained in the tread portion is, and the easier it is to transmit force, so stability and responsiveness are improved, steering is improved, and steering stability is improved during high-speed running. On the other hand, if the aspect ratio is low, the amount of deflection in the side part is small, which may lead to a deterioration in ride comfort.

Considering these points, in the tire according to the present invention, the specific aspect ratio is preferably 30% or more and 60% or less.

The aspect ratio (%) can be calculated by the following formula using the tire cross-sectional height Ht (mm), cross-sectional width Wt (mm), tire outer diameter Dt (mm) when the internal pressure is 250 kPa, and rim diameter R (mm).

$$\text{Aspect ratio (\%)} = (Ht / Wt) \times 100 \text{ (\%)}$$

$$Ht = (Dt - R) / 2$$

[3] Embodiments

Hereinafter, the present invention will be described in detail based on the embodiments.

1. Rubber composition for forming the cap rubber layer

In the tire according to the present invention, the rubber composition forming the cap rubber layer can be obtained by appropriately adjusting the types and amounts of various compounding materials such as the rubber components, fillers, plasticizers, vulcanizing agents and vulcanization accelerators described below.

(1) Ingredients

(a) Rubber component

In the present invention, the rubber component contains styrene-butadiene rubber (SBR) from the viewpoint of containing styrene in the rubber component, but styrene-based polymers other than SBR, such as styrene-butadiene-styrene block copolymers (SBS) and styrene-butadiene block copolymers (SB), may also be contained.

Rubbers (polymers) generally used in tire production, such as diene-based rubbers including isoprene-based rubber, butadiene rubber (BR) and nitrile rubber (NBR), and butyl based rubbers including butyl rubber, may be used in combination with the above-mentioned styrene based polymers. For example, a combination of SBR and BR, or a combination of SBR, BR and isoprene-based rubber is preferred. These rubber components may be an extended rubber which is extended in advance with a plasticizer component such as oil, resin or liquid rubber, as described below.

(i) SBR

The weight average molecular weight of the SBR is, for example, more than 100,000 and less than 2,000,000. In the present invention, as described above, the amount of styrene in the SBR component is 25% by mass or less. The vinyl content (1,2-bonded butadiene content) of the SBR is, for example, more than 5% by mass and less than 70% by mass. The vinyl content of the SBR refers to the 1,2-bonded butadiene content relative to the total butadiene portion in the SBR component. The structure of the SBR can be identified using, for example, a JNM-ECA series device manufactured by JEOL Ltd

In the present invention, the content of SBR per 100 parts by mass of the rubber component is, as described above, 80 parts by mass or more and 100 parts by mass or less, more preferably 85 parts by mass or more, and further preferably 90 parts by mass or more.

There are no particular limit on the SBR, and for example, emulsion-polymerized styrene-butadiene rubber (E-SBR), solution-polymerized styrene-butadiene rubber (S-SBR), and the like can be used. The SBR may be either unmodified SBR or modified SBR. In addition, hydrogenated SBR obtained by hydrogenating the butadiene portion of SBR may be used. The hydrogenated SBR may be obtained by subsequently hydrogenating the BR portion of SBR, or a similar structure may be obtained by copolymerizing styrene, ethylene, and butadiene.

The modified SBR may be any SBR having a functional group that interacts with a filler such as silica, and examples thereof include terminal-modified SBR in which at least one end of the SBR has been modified with a compound (modifying agent) having the functional group (terminal-modified SBR having the functional group at the end), main-chain-modified SBR having the functional group in the main chain, main-chain terminal-modified SBR having the functional group in the main chain and at least one end (for example, SBR having the functional group in the main chain and at least one end modified with the modifying agent), and terminal-modified SBR modified (coupled) with a polyfunctional compound having two or more epoxy groups in the molecule and having a hydroxyl group or epoxy group introduced therein.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, an epoxy group, and the like. These functional groups may have a substituent.

As the modified SBR, for example, SBR modified with a compound (modifying agent) represented by the following formula can be used.

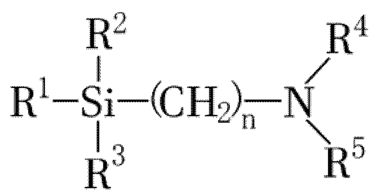

In the formula, $R^1$, $R^2$ and $R^3$ are the same or different and represent an alkyl group, an alkoxy group, a silyloxy group, an acetal group, a carboxyl group (-COOH), a mercapto group (-SH) or a derivative thereof. $R^4$ and $R^5$ are the same or different and represent a hydrogen atom or an alkyl group. $R^4$ and $R^5$ may be bonded to form a ring structure together with the nitrogen atom. "n" represents an integer.

As the modified SBR modified with a compound (modifying agent) represented by the above formula, SBR in which the polymerization terminals (active terminals) of solution-polymerized styrene-butadiene rubber (S-SBR) have been modified with a compound represented by the above formula (such as the modified SBR described in JP-A-2010-111753).

$R^1$, $R^2$ and $R^3$ are preferably alkoxy groups (preferably alkoxy groups having 1 to 8 carbon atoms, more preferably alkoxy groups having 1 to 4 carbon atoms). $R^4$ and $R^5$ are preferably alkyl groups (preferably alkyl groups having 1 to 3 carbon atoms). "n" is preferably 1 to 5, more preferably 2 to 4, and further preferably 3. When $R^4$ and $R^5$ are combined to form a ring structure together with the nitrogen atom, it is preferably a 4- to 8-membered ring. The alkoxy group also includes cycloalkoxy groups (cyclohexyloxy group, and the like) and aryloxy groups (phenoxy group, benzyloxy group, and the like).

Specific examples of the modifying agent include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more kinds.

As the modified SBR, a modified SBR modified with the following compounds (modifying agents) may also be used. Examples of the modifying agents include

polyglycidyl ethers of polyhydric alcohols such as ethylene glycol diglycidyl ether, glycerin triglycidyl ether, trimethylolethane triglycidyl ether, and trimethylolpropane triglycidyl ether;
polyglycidyl ethers of aromatic compounds having two or more phenol groups such as diglycidylated bisphenol A;
polyepoxy compounds such as 1,4-diglycidylbenzene, 1,3,5-triglycidylbenzene, and polyepoxidized liquid polybutadiene;
epoxy group-containing tertiary amines such as 4,4'-diglycidyl-diphenylmethylamine and 4,4'-diglycidyl-dibenzylmethylamine; diglycidylamino compounds such as diglycidylaniline, N, N'-diglycidyl-4-glycidyloxyaniline, diglycidyl orthotoluidine, tetraglycidyl metaxylenediamine, tetraglycidylaminodiphenylmethane, tetraglycidyl-p-phenylenediamine, diglycidylaminomethylcyclohexane, and tetraglycidyl-1,3-bisaminomethylcyclohexane;
amino group-containing acid chlorides such as bis-(1-methylpropyl) carbamic acid chloride, 4-morpholinecarbonyl chloride, 1-pyrrolidinecarbonyl chloride, N,N-dimethylcarbamic acid chloride, and N,N-diethylcarbamic acid chloride;
epoxy group-containing silane compounds such as 1,3-bis-(glycidyloxypropyl)-tetramethyldisiloxane, and (3-glycidyloxypropyl)-pentamethyldisiloxane; sulfide group-containing silane compounds such as (trimethylsilyl)[3-(trimethoxysilyl)propyl]sulfide, (trimethylsilyl) [3-(triethoxysilyl)propyl]sulfide, (trimethylsilyl)[3-(tripropoxysilyl)propyl] sulfide, (trimethylsilyl)[3-(tributoxysilyl)propyl] sulfide, (trimethylsilyl)[3-(methyldimethoxysilyl)propyll sulfide, (trimethylsilyl)[3-(methyldiethoxysilyl)propyl]sulfide, (trimethylsilyl)[3-(methyldipropoxysilyl)propyl]sulfide, and (trimethylsilyl)[3-(methyldibutoxysilyl)propyl]sulfide;
N-substituted aziridine compounds such as ethyleneimine and propyleneimine; alkoxysilane such as methyltriethoxysilane, N,N-bis(trimethylsilyl)-3-aminopropyltrimethoxysilane, N,N-bis(trimethylsilyl)-3-aminoethyltriethoxysilane, N,N-bis(trimethylsilyl)aminoethyltrimethoxysilane, and N,N-bis(trimethylsilyl)aminoethyltriethoxysilane;
(thio)benzophenone compounds having an amino group and/or a substituted amino group, such as 4-N,N-dimethylaminobenzophenone, 4-N,N-di-t-butylaminobenzophenone, 4-N,N-diphenylaminobenzophenone, 4,4'-N,N-bis(dimethylamino)benzophenone, 4,4'-bis(diethylamino)benzophenone, 4,4'-bis(diphenylamino)benzophenone, and N,N,N',N'-bis-(tetraethylamino)benzophenone;
benzaldehyde compounds having an amino group and/or a substituted amino group, such as 4-N,N-dimethylaminobenzaldehyde, 4-N,N-diphenylaminobenzaldehyde, and 4-N,N-divinylaminobenzaldehyde; N-substituted pyrrolidones, such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone;
N-substituted piperidones, such as N-methyl-2-piperidone, N-vinyl-2-piperidone, and N-phenyl-2-piperidone;
lactams such as N-methyl-ε-caprolactam, N-phenyl-ε-caprolactam, N-methyl-ω-laurylolactam, N-vinyl-ω-laurylolactam, N-methyl-β-propiolactam, and N-phenyl-β-propiolactam;
as well as N,N-bis-(2,3-epoxypropoxy)-aniline, 4,4-methylene-bis-(N,N-glycidylaniline), tris-(2,3-epoxypropyl)-1,3,5-triazine-2,4,6-triones, N,N-diethylacetamide, N-methylmaleimide, N,N-diethylurea, 1,3-dimethylethyleneurea, 1,3-divinylethyleneurea, 1,3-diethyl-2-imidazolidinone, 1-methyl-3-ethyl-2-imidazolidinone, 4-N,N-dimethylaminoacetophene, 4-N,N-diethylaminoacetophenone, 1,3-bis(diphenylamino)-2-propanone, 1,7-bis(methylethylamino)-4-heptanone, and the like. The modification with the compound (modifying agent) can be carried out by a known method.

As the SBR, for example, SBR manufactured and sold by Sumitomo Chemical Co., Ltd., JSR Corporation, Asahi Kasei Corporation, Zeon Corporation, etc. can be used. The SBR may be used alone or in combination of two or more kinds.

(ii) BR

In the present invention, the rubber composition may contain BR as necessary. In this case, the content of BR per 100 parts by mass of the rubber component is preferably 20 parts by mass or less, and more preferably 15 parts by mass or less.

The weight average molecular weight of the BR is, for example, more than 100,000 and less than 2,000,000. The vinyl content of the BR is, for example, more than 1 % by mass and less than 30 % by mass. The cis content of the BR is, for example, more than 1 % by mass and less than 98 % by mass. The trans content of the BR is, for example, more than 1 % by mass and less than 60 % by mass.

The BR is not particularly limited, and may be a BR with a high cis content (cis content of 90% or more), a BR with a low cis content, or a BR containing syndiotactic polybutadiene crystals. The BR may be either unmodified or modified, and the modified BR includes modified BR having the above-mentioned functional group introduced therein. These may be used alone or in combination of two or more. The cis content may be measured by infrared absorption spectroscopy.

As the BR, for example, products available from Ube Industries, Ltd., JSR Corporation, Asahi Kasei Corporation, Zeon Corporation, etc. can be used.

(iii) Isoprene-based rubber

In the present invention, the rubber composition may contain an isoprene-based rubber as necessary. In this case, the content of the isoprene-based rubber per 100 parts by mass of the rubber component is preferably 20 parts by mass or less, and more preferably 15 parts by mass or less.

Examples of isoprene-based rubber include natural rubber (NR), isoprene rubber (IR), reformed NR, modified NR, and modified IR.

As the NR, for example, SIR20, RSS#3, TSR20, SVR-L, etc., which are common in the tire industry, can be used. As the IR, there is no particular limitation, and for example, IR2200, etc., which are common in the tire industry can be used. As the reformed NR, deproteinized natural rubber (DPNR), high-purity natural rubber (UPNR), and the like, as the modified NR, epoxidized natural rubber (ENR), hydrogenated natural rubber (HNR), grafted natural rubber, and the like, and as the modified IR, epoxidized isoprene rubber, hydrogenated isoprene rubber, grafted isoprene rubber, and the like can be mentioned. These may be used alone or in combination of two or more kinds.

(iv) Other rubber components

Furthermore, as rubber components other than those mentioned above, rubber (polymer) that is generally used in the manufacture of tires, such as nitrile rubber (NBR), may be included.

(b) Compounding materials other than rubber components

(i) Filler

In the present invention, the rubber composition contains silica as a filler as described above, but may contain other fillers. Specific examples of fillers other than silica include carbon black, graphite, calcium carbonate, talc, alumina, clay, aluminum hydroxide, mica, and biochar.

(i-1) Silica

In the present invention, the amount of silica is, as described above, 100 parts by mass or less, and more preferably 98 parts by mass or less, per 100 parts by mass of the rubber component.

In the present invention, the BET specific surface area of the silica contained in the rubber composition is preferably more than 140 $m^2/g$ from the viewpoint of obtaining good durability performance, more preferably more than 160 $m^2/g$, and further preferably more than 180 $m^2/g$ of finely divided silica. On the other hand, from the viewpoint of obtaining good rolling resistance during high-speed running, it is preferably less than 300 $m^2/g$. The BET specific surface area is the value of $N_2$ SA measured by the BET method in accordance with ASTM D3037-93.

In the present invention, as described above, it is preferable to use silica having a particle size of 17 nm or less in the rubber composition, and by using silica having a small particle size, the frequency of contact with the polymer (styrene domain) can be increased, thereby improving the reinforcement. The lower limit is not particularly limited, but 10 nm or more is preferable from the viewpoint of dispersibility during mixing.

Examples of silica include dry silica (anhydrous silica) and wet silica (hydrous silica). Among them, wet silica is preferable because it has large number of silanol groups. In addition, silica made from hydrated glass or silica made from

biomass materials such as rice husk may also be used.

As the silica, for example, products of Evonik, Degussa, Rhodia, Tosoh Silica Co., Ltd., Solvay Japan Co., Ltd., Tokuyama Corporation, etc. can be used.

(i-2) Silane coupling agent

The rubber composition of the present invention preferably contains a silane coupling agent together with silica.

The silane coupling agent is not particularly limited. Examples of the silane coupling agent include

sulfide-based ones such as bis(3-triethoxysilylpropyl)tetrasulfide, bis (2-triethoxysilylethyl)tetrasulfide, bis (4-triethoxysilylbutyl)tetrasulfide, bis(3-trimethoxysilylpropyl) tetrasulfide, bis(2-trimethoxysilylethyl) tetrasulfide, bis(2-triethoxysilylethyl)trisulfide, bis(4-trimethoxysilylbutyl) trisulfide, bis(3-triethoxysilylpropyl)disulfide, bis(2-triethoxysilylethyl) disulfide, bis(4-triethoxysilylbutyl)disulfide, bis(3-trimethoxysilylpropyl) disulfide, bis(2-trimethoxysilylethyl)disulfide, bis(4-trimethoxysilylbutyl)disulfide, 3-trimethoxysilylpropyl-N, N-dimethylthiocarbamoyltetrasulfide, 2-triethoxysilylethyl-N, N-dimethylthiocarbamoyltetrasulfide, and 3-triethoxysilylpropylmethacrylatemonosulfide;
mercapto-based ones such as 3-mercaptopropyltrimethoxysilane, 2-mercaptoethyltriethoxysilane, and NXT and NXT-Z manufactured by Momentive;
vinyl-based ones such as vinyl triethoxysilane, and vinyl trimethoxysilane;
amino-based ones such as 3-aminopropyltriethoxysilane and 3-aminopropyltrimethoxysilane;
glycidoxy-based ones such as $\gamma$-glycidoxypropyltriethoxysilane and $\gamma$-glycidoxypropyltrimethoxysilane;
nitro-based ones such as 3-nitropropyltrimethoxysilane, and 3-nitropropyltriethoxysilane; and
chloro-based ones such as 3-chloropropyltrimethoxysilane and 3-chloropropyltriethoxysilane. These may be used alone or in combination of two or more.

As the silane coupling agent, for example, products available from Evonik Industries, Momentive Corporation, Shin-Etsu Silicones Co. Ltd., Tokyo Chemical Industry Co. Ltd., Azumax Co. Ltd., Dow Corning Toray Co. Ltd., etc. can be used.

The content of the silane coupling agent is, for example, more than 3 parts by mass and less than 25 parts by mass relative to 100 parts by mass of silica.

(i-3) Carbon black

In the present invention, the rubber composition preferably contains carbon black from the viewpoint of reinforcement.

The specific content ratio of carbon black per 100 parts by mass of the rubber component is preferably 5 parts by mass or more, and more preferably 15 parts by mass or more. On the other hand, it is preferably 35 parts by mass or less, and more preferably 30 parts by mass or less.

The carbon black is not particularly limited, and examples thereof includes furnace black (furnace carbon black) such as SAF, ISAF, HAF, MAF, FEF, SRF, GPF, APF, FF, CF, SCF and ECF; acetylene black (acetylene carbon black); thermal black (thermal carbon black) such as FTand MT; and channel black (channel carbon black) such as EPC, MPC and CC. These may be used alone or in combination of two or more.

The CTAB specific surface area (Cetyl Tri-methyl Ammonium Bromide) of the carbon black is preferably 130 $m^2/g$ or more, more preferably 160 $m^2/g$ or more, and further preferably 170 $m^2/g$ or more. On the other hand, it is preferably 250 $m^2/g$ or less, and more preferably 200 $m^2/g$ or less. The CTAB specific surface area is a value measured in accordance with ASTM D3765-92.

The specific carbon black is not particularly limited, and examples thereof include N134, N110, N220, N234, N219, N339, N330, N326, N351, N550, and N762. Commercially available products include, for example, products of Asahi Carbon Co., Ltd., Cabot Japan Co., Ltd., Tokai Carbon Co., Ltd., Mitsubishi Chemical Corporation, Lion Corporation, Shin Nikka Carbon Co., Ltd., Columbia Carbon Co., Ltd., etc. These may be used alone or in combination of two or more.

(i-4) Other fillers

In addition to the above-mentioned silica and carbon black, the rubber composition may further contain, as necessary, fillers commonly used in the tire industry, such as graphite, calcium carbonate, talc, alumina, clay, aluminum hydroxide, mica, etc. The content of these fillers is, for example, more than 0.1 part by mass and less than 200 parts by mass per 100 parts by mass of the rubber component.

(ii) Plasticizer components

The rubber composition may contain oil, liquid rubber, and resin as plasticizer components that soften rubber. The plasticizer components are components that can be extracted from the vulcanized rubber with acetone. When the rubber composition contains the above-mentioned extension rubber components, the extension components contained therein are included in these plasticizer components. The total content of the plasticizer components is preferably 30 parts by mass or more, more preferably 40 parts by mass or more, relative to 100 parts by mass of the rubber component. On the other hand, it is preferably 55 parts by mass or less, more preferably 50 parts by mass or less.

(ii-1) Oil

Examples of the oil include mineral oil (generally called process oil), vegetable oil, and mixtures thereof. As the mineral oil (process oil), paraffin-based process oils such as MES (mild extract solvated), DAE (distillate aromatic extract), TDAE (treated distillate aromatic extract), TRAE (treated residual aromatic extract), and RAE (residual aromatic extract), aromatic process oils, naphthene -based process oils, and the like can be used. Examples of vegetable oils include castor oil, cottonseed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. These may be used alone or in combination of two or more. From the viewpoint of life cycle assessment, waste oils used as lubricants in rubber mixers and automobile engines, waste edible oils, etc. may be used as appropriate.
Specific examples of process oils (mineral oils) include products from Idemitsu Kosan Co., Ltd., Sankyo Yuka Industry Co., Ltd., ENEOS Corporation, Orisoi Corporation, H&R Corporation, Toyokuni Oil Mills Co., Ltd., Showa Shell Sekiyu Co., Ltd., Fuji Kosan Co., Ltd., etc.

(ii-2) Liquid rubber

The liquid rubber mentioned as a plasticizer is a polymer in a liquid state at room temperature (25°C) and is a rubber component that can be extracted by acetone extraction from a vulcanized tire. Examples of the liquid rubber include farnesene-based polymers, liquid diene-based polymers, and hydrogenated products thereof.
The farnesene-based polymer is a polymer obtained by polymerizing farnesene, and has a structural unit based on farnesene. Farnesene includes isomers such as $\alpha$-farnesene ((3E, 7E) -3,7,11-trimethyl-1,3,6,10-dodecatetraene) and $\beta$-farnesene (7,11-dimethyl-3-methylene-1, 6,10-dodecatorien).
The farnesene-based polymer may be a homopolymer of farnesene (farnesene homopolymer) or a copolymer of farnesene and a vinyl monomer (farnesene-vinyl monomer copolymer).
Examples of the liquid diene polymer include a liquid styrene-butadiene copolymer (liquid SBR), a liquid butadiene polymer (liquid BR), a liquid isoprene polymer (liquid IR), and a liquid styrene isoprene copolymer (liquid SIR).
The liquid diene polymer has a polystyrene-converted weight average molecular weight (Mw) measured by gel permeation chromatography (GPC) of, for example, more than $1.0 \times 10^3$ and less than $2.0 \times 10^5$. In the present specification, Mw of the liquid diene polymer is a polystyrene conversion value measured by gel permeation chromatography (GPC).
The content of the liquid rubber (the total content of the liquid farnesene-based polymer, the liquid diene-based polymer, etc.) is, for example, more than 1 part by mass and less than 100 parts by mass with respect to 100 parts by mass of the rubber component.
As the liquid rubber, for example, products of Kuraray Co., Ltd. and Clay Valley Co., Ltd., etc. can be used.

(ii-3) Resin Component

The resin component also functions as a tackifier and may be solid or liquid at room temperature. Specific examples of the resin component include rosin-based resin, styrene-based resin, coumarone-based resin, terpene-based resin, C5 resin, C9 resin, C5C9 resin, and acrylic resin, and two or more of them may be used in combination. The content of the resin component is preferably 20 parts by mass or more, more preferably 30 parts by mass or more, and further preferably 35 parts by mass or more, relative to 100 parts by mass of the rubber component. The upper limit is preferably 50 parts by mass or less, more preferably 45 parts by mass or less, and further preferably 40 parts by mass or less, in consideration of the softening of the rubber.
Rosin-based resins are resins whose main component is rosin acid obtained by processing pine resin. These rosin resins (rosins) can be classified according to whether they are modified or not, and can be classified into unmodified rosin (non-modified rosin) and modified rosin (rosin derivatives). Examples of unmodified rosins include tall rosin (also known as tall oil rosin), gum rosin, wood rosin, disproportionated rosin, polymerized rosin, hydrogenated rosin, and other chemically modified rosins. Modified rosin is a modification of unmodified rosin, and examples of such modifications

include rosin esters, unsaturated carboxylic acid modified rosins, unsaturated carboxylic acid modified rosin esters, rosin amide compounds, and rosin amine salts.

The styrene resin is a polymer using a styrene monomer as a constituent monomer, and examples thereof include a polymer obtained by polymerizing a styrene monomer as a main component (50% by mass or more). Specifically, it includes homopolymers obtained by individually polymerizing styrene monomers (styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene, etc.), copolymers obtained by copolymerizing two or more styrene monomers, and, in addition, copolymers obtained by copolymerizing a styrene monomer and other monomers that can be copolymerized with the styrene monomer.

Examples of the other monomers include acrylonitriles such as acrylonitrile and methacrylate; unsaturated carboxylic acids such as acrylic acid and methacrylic acid; unsaturated carboxylic acid esters such as methyl acrylate and methyl methacrylate; dienes such as chloroprene, butadiene, and isoprene, olefins such as 1-butene and 1-pentene; and α, β-unsaturated carboxylic acids such as maleic anhydride and acid anhydrides thereof.

As the coumarone-based resin, coumarone-indene resin is preferably used. Coumarone-indene resin is a resin containing coumarone and indene as monomer components constituting the skeleton (main chain) of the resin. Examples of the monomer component contained in the skeleton other than coumarone and indene include styrene, α-methylstyrene, methylindene, and vinyltoluene.

The content of the coumarone-indene resin is, for example, more than 1.0 part by mass and less than 50.0 parts by mass with respect to 100 parts by mass of the rubber component.

The hydroxyl value (OH value) of the coumarone-indene resin is, for example, more than 15 mgKOH/g and less than 150 mgKOH/g. The OH value is the amount of potassium hydroxide required to neutralize acetic acid bonded to a hydroxyl group when 1 g of the resin is acetylated, and is expressed in milligrams. It is a value measured by potentiometric titration method (JIS K 0070: 1992).

The softening point of the coumarone-indene resin is, for example, higher than 30 °C and lower than 160 °C. The softening point is the temperature at which the ball drops when the softening point defined in JIS K 6220-1: 2001 is measured by a ring-ball type softening point measuring device.

Examples of the terpene resins include polyterpenes, terpene phenols, and aromatic-modified terpene resins. Polyterpene is a resin obtained by polymerizing a terpene compound and a hydrogenated product thereof. The terpene compound is a hydrocarbon having a composition of $(C_5H_8)_n$ or an oxygen-containing derivative thereof, which is a compound having a terpene classified as monoterpenes ($C_{10}H_{16}$), sesquiterpenes ($C_{15}H_{24}$), diterpenes ($C_{20}H_{32}$), etc. as the basic skeleton. Examples thereof include α-pinene, β-pinene, dipentene, limonene, myrcene, alloocimene, osimene, α-phellandrene, α-terpinene, γ-terpinene, terpinolene, 1,8-cineol, 1,4-cineol, α-terpineol, β-terpineol, and γ-terpineol.

Examples of the polyterpene include terpene resins such as α-pinene resin, β-pinene resin, limonene resin, dipentene resin, and β-pinene/limonene resin, which are made from the above-mentioned terpene compound, as well as hydrogenated terpene resin obtained by hydrogenating the terpene resin. Examples of the terpene phenol include a resin obtained by copolymerizing the above-mentioned terpene compound and the phenol compound, and a resin obtained by hydrogenating above-mentioned resin. Specifically, a resin obtained by condensing the above-mentioned terpene compound, the phenol compound and formalin can be mentioned. Examples of the phenol compound include phenol, bisphenol A, cresol, and xylenol. Examples of the aromatic-modified terpene resin include a resin obtained by modifying a terpene resin with an aromatic compound, and a resin obtained by hydrogenating the above-mentioned resin. The aromatic compound is not particularly limited as long as it is a compound having an aromatic ring, and examples thereof include phenol compounds such as phenol, alkylphenol, alkoxyphenol, and unsaturated hydrocarbon group-containing phenol; naphthol compounds such as naphthol, alkylnaphthol, alkoxynaphthol, and unsaturated hydrocarbon group-containing naphthols; styrene derivatives such as styrene, alkylstyrene, alkoxystyrene, unsaturated hydrocarbon group-containing styrene; coumarone; and indene.

The C5 resin refers to a resin obtained by polymerizing a C5 fraction. Examples of the C5 fraction include petroleum fractions having 4 to 5 carbon atoms such as cyclopentadiene, pentene, pentadiene, and isoprene. As the C5-based petroleum resin, a dicyclopentadiene resin (DCPD resin) is preferably used.

The C9 resin refers to a resin obtained by polymerizing a C9 fraction, and may be hydrogenated or modified. Examples of the C9 fraction include petroleum fractions having 8 to 10 carbon atoms such as vinyltoluene, alkylstyrene, indene, and methyl indene. As the specific examples, a coumarone-indene resin, a coumarone resin, an indene resin, and an aromatic vinyl resin are preferably used. As the aromatic vinyl resin, a homopolymer of α-methylstyrene or styrene or a copolymer of α-methylstyrene and styrene is preferable because it is economical, easy to process, and excellent in heat generation. A copolymer of α-methylstyrene and styrene is more preferred. As the aromatic vinyl-based resin, for example, those commercially available from Clayton, Eastman Chemical, etc. can be used.

The C5C9 resin refers to a resin obtained by copolymerizing the C5 fraction and the C9 fraction, and may be hydrogenated or modified. Examples of the C5 fraction and the C9 fraction include the above-mentioned petroleum fraction. As the C5C9 resin, for example, those commercially available from Tosoh Corporation, LUHUA, etc. can be used.

The acrylic resin is not particularly limited, but for example, a solvent-free acrylic resin can be used.

As the solvent-free acrylic resin, a (meth) acrylic resin (polymer) synthesized by a high-temperature continuous polymerization method (high-temperature continuous lump polymerization method (a method described in US 4414370 B, JP 84-6207 A, JP 93-58805 B, JP 89-313522 A, US 5010166 B, Toa Synthetic Research Annual Report TREND2000 No. 3 p42-45, and the like) without using polymerization initiators, chain transfer agents, organic solvents, etc. as auxiliary raw materials as much as possible, can be mentioned. In the present disclosure, (meth) acrylic means methacrylic and acrylic.

Examples of the monomer component constituting the acrylic resin include (meth) acrylic acid, and (meth) acrylic acid derivatives such as (meth) acrylic acid ester (alkyl ester, aryl ester, aralkyl ester, etc.), (meth) acrylamide, and (meth) acrylamide derivative.

In addition, as the monomer component constituting the acrylic resin, aromatic vinyl compounds such as styrene, α-methylstyrene, vinyltoluene, vinylnaphthalene, divinylbenzene, trivinylbenzene, divinylnaphthalene, and the like may be used, together with (meth) acrylic acid or (meth) acrylic acid derivative.

The acrylic resin may be a resin composed of only a (meth) acrylic component or a resin also having a component other than the (meth) acrylic component. Further, the acrylic resin may have a hydroxyl group, a carboxyl group, a silanol group, or the like.

As the resin component, for example, a product of Maruzen Petrochemical Co., Ltd., Sumitomo Bakelite Co., Ltd., Yasuhara Chemical Co., Ltd., Tosoh Co., Ltd., Rutgers Chemicals Co., Ltd., BASF Co., Ltd., Arizona Chemical Co., Ltd., Nitto Chemical Co., Ltd., Co., Ltd., Nippon Catalyst Co., Ltd., ENEOS Corporation, Arakawa Chemical Industry Co., Ltd., Taoka Chemical Industry Co., Ltd. can be used.

(iii) Stearic acid

In the present invention, the rubber composition preferably contains stearic acid. The content of stearic acid is, for example, more than 0.5 parts by mass and less than 10.0 parts by mass per 100 parts by mass of the rubber component. As the stearic acid, a conventionally known product can be used. For example, a product of NOF Corporation, NOF Corporation, Kao Corporation, FUJIFILM Wako Pure Chemical Industries, Ltd., Chiba Fatty Acid Co., Ltd., etc. can be used.

(iv) Anti-aging agents

In the present invention, the rubber composition preferably contains an anti-aging agent. The content of the anti-aging agent is, for example, more than 0.5 parts by mass and less than 10 parts by mass, and more preferably 1 part by mass or more, per 100 parts by mass of the rubber component.

Examples of the antiaging agent include naphthylamine-based antiaging agents such as phenyl-α-naphthylamine; diphenylamine-based antiaging agents such as octylated diphenylamine and 4,4'-bis (α, α'-dimethylbenzyl) diphenylamine; p-phenylenediamine-based anti-aging agent such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based anti-aging agent such as a polymer of 2,2,4-trimethyl-1,2-dihydroquinolin; monophenolic anti-aging agents such as 2,6-di-t-butyl-4-methylphenol, styrenated phenol; bis, tris, polyphenolic anti-aging agents such as tetrakis-[methylene-3-(3',5'-di-t-butyl-4'-hydroxyphenyl)propionate] methane. These may be used alone or in combination of two or more.

As the anti-aging agent, for example, products of Seiko Chemical Co., Ltd., Sumitomo Chemical Co., Ltd., Ouchi Shinko Chemical Industry Co., Ltd., Flexsys Co., Ltd., etc. can be used.

(v) Wax

In the present invention, the rubber composition preferably contains a wax. The content of the wax per 100 parts by mass of the rubber component is, for example, 0.5 to 20 parts by mass, preferably 1.0 to 15 parts by mass, and more preferably 1.5 to 10 parts by mass.

The wax is not particularly limited, and examples thereof include petroleum waxes such as paraffin wax and microcrystalline wax; natural waxes such as vegetable wax and animal wax; synthetic waxes such as polymers of ethylene, propylene, etc. These may be used alone or in combination of two or more kinds.

As the wax, for example, products available from Ouchi Shinko Chemical Industry Co., Ltd., Nippon Seiro Co., Ltd., Seiko Chemical Co., Ltd., etc. can be used.

(vi) Zinc oxide

The rubber composition may contain zinc oxide. The content of zinc oxide is, for example, more than 0.5 parts by mass and less than 10 parts by mass with respect to 100 parts by mass of the rubber component. As the zinc oxide, a

conventionally known product can be used, and for example, products of Mitsui Mining & Smelting Co., Ltd., Toho Zinc Co., Ltd., Hakusui Tech Co., Ltd., Shodo Chemical Industry Co., Ltd., Sakai Chemical Industry Co., Ltd., etc. can be used.

(vii) Crosslinking agents and vulcanization accelerators

The rubber composition preferably contains a crosslinking agent such as sulfur. The content of the crosslinking agent is, for example, more than 0.1 parts by mass and less than 10.0 parts by mass per 100 parts by mass of the rubber component.

Examples of sulfur include powdered sulfur, precipitated sulfur, colloidal sulfur, insoluble sulfur, highly dispersible sulfur, soluble sulfur, etc., which are commonly used in the rubber industry. These may be used alone or in combination of two or more kinds.

As the sulfur, for example, products available from Tsurumi Chemical Industry Co., Ltd., Karuizawa Sulfur Co., Ltd., Shikoku Chemical Industry Co., Ltd., Flexsys Corporation, Nippon Kanryu Kogyo Co., Ltd., Hosoi Chemical Industry Co., Ltd., etc. can be used.

Examples of crosslinking agents other than sulfur include vulcanizing agents containing sulfur atoms, such as Tackirol V200 manufactured by Taoka Chemical Co., Ltd. and KA9188 (1,6-bis (N,N' -dibenzylthiocarbamoyldithio) hexane) manufactured by LANXESS AG, and organic peroxides, such as dicumyl peroxide.

The rubber composition preferably contains a vulcanization accelerator. The content of the vulcanization accelerator per 100 parts by mass of the rubber component is, for example, more than 0.3 parts by mass and less than 10.0 parts by mass.

Examples of the vulcanization accelerator include thiazole-based vulcanization accelerators such as 2-mercaptobenzothiazole, di-2-benzothiazolyl disulfide, and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenyl guanidine, di-orthotolyl guanidine, and orthotolyl biguanidine. These may be used alone or in combination of two or more.

(viii) Other

In addition to the above components, the rubber composition may further contain additives commonly used in the tire industry, such as fatty acid metal salts, carboxylate metal salts, organic peroxides, reversion inhibitors, etc., as necessary. The content of these additives is, for example, more than 0.1 parts by mass and less than 200 parts by mass per 100 parts by mass of the rubber component.

(2) Preparation of rubber composition

The rubber composition that forms the cap rubber layer is prepared by appropriately adjusting the various compounding materials described above and using a general method, such as a manufacturing method including a base kneading process in which the rubber component is kneaded with a filler such as silica, and a finish kneading process in which the kneaded product obtained in the base kneading process is kneaded with a crosslinking agent.

The kneading can be carried out using a known (sealed) kneader such as a Banbury mixer, a kneader, or an open roll.

The kneading temperature in the base kneading step is, for example, higher than 50°C and lower than 200°C, and the kneading time is, for example, longer than 30 seconds and shorter than 30 minutes. In the base kneading step, in addition to the above-mentioned components, compounding agents conventionally used in the rubber industry, for example, plasticizer components such as oil, zinc oxide, anti-aging agents, waxes, vulcanization accelerators, etc., may be appropriately added and kneaded as necessary.

In the finish kneading step, the kneaded product obtained in the base kneading step is kneaded with a crosslinking agent. The kneading temperature in the finish kneading step is, for example, higher than room temperature and lower than 80°C, and the kneading time is, for example, longer than 1 minute and shorter than 15 minutes. In the finish kneading step, in addition to the above components, a vulcanization accelerator, zinc oxide, etc. may be appropriately added and kneaded as necessary.

2. Tire manufacturing

The tire according to the present invention can be produced as an unvulcanized tire by molding the rubber composition obtained as described above into a tread rubber of a predetermined shape as a cap rubber layer, and then

molding it together with other tire members in a normal manner on a tire building machine.

In the case where the tread portion has a multi-layer structure with a base rubber layer, the rubber composition for forming the base rubber layer can be obtained by kneading the above-mentioned rubber components and compounding materials in the same manner while appropriately changing the compounding amounts. Then, the rubber composition for forming the base rubber layer is extruded together with the cap rubber layer to form a tread rubber of a predetermined shape, and then molded together with other tire members in a normal manner on a tire building machine to produce an unvulcanized tire.

Specifically, on the molded drum, the inner liner as a member to ensure the air-tightness of the tire, the carcass as a member to withstand the load, impact and filling air pressure received by the tire, the belt member as a member to strongly tighten the carcass to increase the rigidity of the tread, and the like are wound, both ends of the carcass are fixed to both side edges, a bead part as a member for fixing the tire to the rim is arranged, and they are formed into a toroid shape. Then the tread is pasted on the center of the outer circumference, and a sidewall is pasted to the radially outer side to form the side portion, thereby producing an unvulcanized tire.

The unvulcanized tire thus produced is then heated and pressurized in a vulcanizer to obtain a tire. The vulcanization step can be carried out by applying a known vulcanization method. The vulcanization temperature is, for example, higher than 120°C and lower than 200°C, and the vulcanization time is, for example, longer than 5 minutes and shorter than 15 minutes.

The obtained tire has the microscopic mobility, high heat generation, and ease of force transmission of the rubber matrix itself due to the cooperation of the effects (1) to (4) described in "2. Mechanism of effect manifestation in tire according to the present invention" above. At the same time, it has the road surface conformance due to appropriate rigidity from a macroscopic point of view and the ease of generating reaction force due to the ease of force transmission. As a result, it has excellent responsiveness when turning the steering angle while running at high speed and can sufficiently improve the steering stability during high-speed running.

The tire according to the present invention is not particularly limited in category and can be used as a passenger car tire, a tire for heavy load vehicles such as trucks and buses, a two-wheeled vehicle tire, a run-flat tire, a non-pneumatic tire, etc., but is preferably used as a passenger car tire. Also, it is preferably a pneumatic tire.

[EXAMPLES]

Examples (working examples) that are considered to be preferable for carrying out the present invention are shown below, but the scope of the present invention is not limited to these working examples. In the working examples, a pneumatic tire (tire size 225/45R17, aspect ratio: 45%) manufactured from a composition obtained by varying the formulation according to each table using various chemicals shown below was examined, and the results calculated based on the following evaluation method are shown in Tables 2 to 4.

1. Rubber composition for forming the cap rubber layer

(1) Mixture of ingredients

(a) Rubber component

(i) SBR-1: Modified S-SBR (styrene content: 45% by mass, vinyl content: 35% by mass) obtained by the method shown in Production Example 1 below.
(ii) SBR-2: Modified S-SBR (styrene content: 25% by mass, vinyl content: 25% by mass) obtained by the method shown in Production Example 2 below.
(iii) SBR-3: HPR840 (S-SBR) manufactured by JSR Corporation (styrene content: 10% by mass, vinyl content: 42% by mass)
(iv) BR: Ubepol BR150B (Hicis BR) manufactured by Ube Industries, Ltd. (cis content 97% by mass, trans content 2% by mass, vinyl content 1% by mass)

(Production Example 1)

The SBR-1 is prepared according to the following procedure. First, cyclohexane, tetrahydrofuran, styrene, and 1,3-butadiene are charged into a nitrogen-substituted autoclave reactor. After adjusting the temperature of the reactor contents to 20°C, n-butyllithium is added to initiate polymerization. Polymerization is carried out under adiabatic conditions, with the maximum temperature being 85°C. When the polymerization conversion rate reaches 99%, butadiene

is added, and polymerization is continued for another 5 minutes. Thereafter, methyltrimethoxysilane is added as a modifying agent and the reaction is carried out for 15 minutes. After the polymerization reaction is completed, 2,6-di-tert-butyl-p-cresol is added. Next, the solvent is removed by steam stripping, and the mixture is dried with a heated roll adjusted to 110°C to obtain SBR-1.

(Production Example 2)

The SBR-2 is prepared according to the following procedure. First, two autoclaves with an internal volume of 10 L, an inlet at the bottom and an outlet at the top, and equipped with a stirrer and a jacket are connected in series as reactors, and butadiene, styrene, and cyclohexane are mixed in a predetermined ratio. This mixed solution is passed through a dehydration column filled with activated alumina, mixed with n-butyllithium in a static mixer to remove impurities, and then, continuously fed from the bottom of the first reactor. Furthermore, 2,2-bis(2-oxolanyl)propane as a polar substance and n-butyllithium as a polymerization initiator are continuously fed from the bottom of the first reactor at a predetermined rate, respectively, and the temperature inside the reactor is maintained at 95°C. The polymer solution is continuously withdrawn from the head of the reactor and fed to the second reactor. The temperature of the second reactor is kept at 95°C, and a mixture of tetraglycidyl-1,3-bisaminomethylcyclohexane (monomer) as a modifying agent and an oligomer component is continuously added as a 1000-fold diluted solution of cyclohexane at a predetermined rate to carry out a modification reaction. This polymer solution is continuously withdrawn from the reactor, and an antioxidant is continuously added using a static mixer, and then, the solvent is removed to obtain SBR-2.

The vinyl contents (unit: % by mass) of SBR-1 and SBR-2 obtained above are determined by infrared spectroscopy from the absorption intensity at about 910 $cm^{-1}$, which is the absorption peak of the vinyl group, and the styrene contents (unit: % by mass) are determined from the refractive index in accordance with JIS K6383:1995.

(b) Compounding materials other than rubber components

(i) Silica: Ultrasil VN3 manufactured by Evonik Industries ($N_2SA$: 175 $m^2/g$, average primary particle diameter: 15 nm)
(ii) Carbon black: Diablack N220 manufactured by Mitsubishi Chemical Corporation ($N_2SA$: 115 $m^2/g$)
(iii) Silane coupling agent: Si69 manufactured by Evonik Industries (Bis(3-triethoxysilylpropyl)tetrasulfide)
(iv) Resin: T-REZ PR801 manufactured by ENEOS Corporation (Hydrogenated aromatic modified alicyclic hydrocarbon resin)
(v) Oil: VIVATEC 500 (TDAE oil) manufactured by H&R Corporation
(vi) Zinc oxide: Zinc oxide type 2 manufactured by Mitsui Mining & Smelting Co., Ltd.
(vii) Anti-aging agent-1: Antigen 6C manufactured by Sumitomo Chemical Co., Ltd. (N-(1,3-dimethylbutyl)-N'-phenyl-p-phenylenediamine)
(viii) Anti-aging agent-2: Antigen RD manufactured by Sumitomo Chemical Co., Ltd. (Polymer of 2,2,4-trimethyl-1,2-dihydroquinoline)
(ix) Wax: Sannok N (selected special wax) manufactured by Ouchi Shinko Chemical Industry Co., Ltd.
(x) Stearic acid: Bead stearic acid "Tsubaki" manufactured by NOF Corporation
(xi) Vulcanization accelerator-1: Nocceler CZ manufactured by Ouchi Shinko Chemical Industry Co., Ltd. (N-cyclohexyl-2-benzothiazylsulfenamide (CBS))
(xii) Vulcanization accelerator-2: Nocceler D manufactured by Ouchi Shinko Chemical Industry Co., Ltd. (N,N'-diphenylguanidine (DPG))
(xiii) Sulfur: Powdered sulfur manufactured by Karuizawa Sulfur Co., Ltd.

(2) Rubber composition for forming the cap rubber layer

According to the formulation shown in Tables 2 to 4, materials other than sulfur and vulcanization accelerator are kneaded for 5 minutes under the condition of 150°C using a Banbury mixer to obtain a kneaded mixture. The amounts of each compound are in parts by mass.

Next, sulfur and a vulcanization accelerator are added to the kneaded mixture, and the mixture is kneaded for 5 minutes under the condition of 80°C using an open roll to obtain a rubber composition for forming the cap rubber layer.

2. Rubber composition forming the base rubber layer

In parallel, a rubber composition for forming the base rubber layer is obtained based on the formulation shown in Table 1 in the same manner as in the production of the rubber composition for forming the cap rubber layer.

[Table 1]

| Mixture of ingredients | Formulation (parts by mass) |
|---|---|
| NR (TSR20) | 70 |
| BR (UBEPOL-BR150B manufactured by Ube Industries, Ltd.) | 30 |
| Carbon black (Cabot Japan Co., Ltd.'s Show Black N330T) | 35 |
| Stearic acid ("Tsubaki" stearic acid, manufactured by NOF Corporation) | 2 |
| Zinc oxide (Zinc oxide No. 1 manufactured by Mitsui Mining & Smelting Co., Ltd.) | 4 |
| Wax (Sannok Wax manufactured by Ouchi Shinko Chemical Co., Ltd. ) | 2 |
| Anti-aging agent (Nocrac 6C manufactured by Ouchi Shinko Chemical Industry Co., Ltd.) | 3 |
| Anti-aging agent (Antage RD manufactured by Kawaguchi Chemical Industry Co., Ltd.) | 1 |
| Sulfur (powdered sulfur manufactured by Tsurumi Chemical Industry Co., Ltd.) | 1.7 |
| Vulcanization accelerator (Nocceler CZ-G manufactured by Ouchi Shinko Chemical Industry Co., Ltd.) | 1.2 |

3. Manufacturing of pneumatic tires

Each rubber composition is extruded into a predetermined shape so that the (cap rubber layer/base rubber layer) ratio is 70/30, to produce a tread portion having a thickness shown in Tables 2 to 4.

Thereafter, the tread portion is stacked together with other tire members to form an unvulcanized tire, then, the tire is press-vulcanized for 10 minutes under a condition of 170°C to produce pneumatic tires (test tires) of Examples 1 to 11 shown in Tables 2 and 3, and pneumatic tires (test tires) of Comparative Examples 1 to 5 shown in Table 4.

4. Calculation of parameters

(1) 30°CE*

A rubber test piece for measuring viscoelasticity was prepared by cutting out a piece of rubber of 20 mm length×4 mm width×2 mm thickness from the cap rubber layer of the tread portion of each test tire, with the long side being in the tire circumferential direction. Then, the 30°CE* (MPa) for each rubber test piece was measured using "Eplexor" series manufactured by GABO Corporation under the conditions of a temperature of 30°C, a frequency of 10 Hz, an initial strain of 5%, and a dynamic strain of 1%, in a deformation mode of tensile.

The 30°CE* (MPa) of the base rubber layer was set to 4.0 MPa.

(2) 30°Ctan δ

A rubber test piece for measuring viscoelasticity was prepared by cutting out a piece of rubber of 20 mm length×4 mm width×2 mm thickness from the cap rubber layer of the tread portion of each test tire, with the long side in the tire circumferential direction. Then, the 30°Ctan δ for each rubber test piece was measured using "Eplexor" series manufactured by GABO under the conditions of temperature 30°C, frequency 10 Hz, initial strain 5%, dynamic strain 1%, and deformation mode: tensile.

The 30°C tan δ of the base rubber layer was set to 0.07.

(3) AE

Using a vulcanized rubber test piece prepared by cutting out from the cap rubber layer of the tread portion of each test tire, the AE (% by mass) is determined in accordance with JIS K 6229:2015.

(4) Land Ratio

The land ratio R (%) is calculated using the method described above.

## (5) 30°CE*×Land ratio

Based on the 30°CE* (MPa) of the cap rubber layer and the above-mentioned land ratio R (%), 30°CE* (MPa)×land ratio (%) is calculated.

## (6) 30°CE*×tread thickness G (mm)

Based on the 30°CE* (MPa) of the cap rubber layer and the thickness G (mm) of the tread portion, 30°CE*/thickness G (mm) of the tread portion is calculated.

5. Performance evaluation test (evaluation of driving stability at high speeds)

After installing each test tire on all wheels of the vehicle (domestic FF vehicle, displacement 2000cc) and filling it with air so that the internal pressure becomes the standardized internal pressure. The vehicle is then run on a test course with a dry road surface for break-in, and then the vehicle is run at approximately 120km/h. Twenty drivers each perform a sensory evaluation on a five-point scale (the higher the number, the better) of the stability of control when steering into a corner. The total score of the evaluations by the twenty drivers is then calculated.

Next, the result of Comparative Example 2 is set as 100 and indexed according to the following formula to evaluate the steering stability when running at high speed on a dry road surface. A larger value indicates better steering stability when running at high speed on a dry road surface.

$$\text{Steering stability when driving at high speeds on dry roads} = [(\text{Test tire results}) / (\text{Comparative example 2 results})] \times 100$$

[Table 2]

| Example No. | Example | | | | | |
|---|---|---|---|---|---|---|
| | 1 | 2 | 3 | 4 | 5 | 6 |
| Cap rubber layer composition | | | | | | |
| SBR-1 | - | - | - | - | - | - |
| SBR-2 | 80 | - | 90 | 90 | - | 90 |
| SBR-3 | - | 80 | - | - | 90 | - |
| B.R. | 20 | 20 | 10 | 10 | 10 | 10 |
| silica | 98 | 98 | 98 | 98 | 98 | 98 |
| Carbon Black | 25 | 25 | 5 | 15 | 15 | 5 |
| Silane Coupling Agent | 7.8 | 7.8 | 7.8 | 7.8 | 7.8 | 7.8 |
| resin | 30 | 35 | 30 | 35 | 40 | 20 |
| oil | 25 | 20 | 5 | 5 | 0 | 5 |
| Zinc oxide | 2 | 2 | 2 | 2 | 2 | 2 |
| Anti-aging agent-1 | 3 | 3 | 3 | 3 | 3 | 3 |
| Anti-aging agent-2 | 1 | 1 | 1 | 1 | 1 | 1 |
| wax | 2 | 2 | 2 | 2 | 2 | 2 |
| Stearic acid | 2 | 2 | 2 | 2 | 2 | 2 |
| Vulcanization accelerator-1 | 2 | 2 | 2 | 2 | 2 | 2 |
| Vulcanization accelerator-2 | 2.5 | 2.5 | 2.5 | 2.5 | 2.5 | 2.5 |
| sulfur | 1.2 | 1.2 | 1.2 | 1.2 | 1.2 | 1.2 |

(continued)

| Parameters | | | | | | |
|---|---|---|---|---|---|---|
| 30°CE* (MPa) | 8.3 | 8.7 | 8.1 | 8.8 | 9.2 | 9.2 |
| Tread thickness G(mm) | 8.5 | 8.5 | 8.5 | 8.5 | 8.5 | 8.5 |
| 30°C tan δ | 0.26 | 0.26 | 0.21 | 0.24 | 0.24 | 0.2 |
| AE (% by mass) | 18.3 | 18.3 | 13.4 | 14.5 | 14.5 | 10 |
| Land ratio R (%) | 65 | 65 | 65 | 65 | 65 | 65 |
| 30°CE* (MPa) × R (%) | 540 | 566 | 527 | 572 | 598 | 598 |
| 30°CE* (MPa) / G(mm)) | 0.98 | 1.02 | 0.95 | 1.04 | 1.08 | 1.08 |
| Performance evaluation | | | | | | |
| Steering stability after high-speed running | 108 | 114 | 112 | 122 | 124 | 126 |

[Table 3]

| Example No. | Example | | | | |
|---|---|---|---|---|---|
| | 7 | 8 | 9 | 10 | 11 |
| Cap rubber layer composition | | | | | |
| SBR-1 | - | - | - | - | - |
| SBR-2 | - | 90 | 90 | 90 | 100 |
| SBR-3 | 90 | - | - | - | - |
| B.R. | 10 | 10 | 10 | 10 | - |
| silica | 98 | 98 | 98 | 98 | 100 |
| Carbon Black | 5 | 5 | 5 | 15 | 5 |
| Silane Coupling Agent | 7.8 | 7.8 | 7.8 | 7.8 | 8 |
| resin | 25 | 20 | 20 | 35 | 20 |
| oil | 0 | 5 | 5 | 5 | 5 |
| Zinc oxide | 2 | 2 | 2 | 2 | 2 |
| Anti-aging agent-1 | 3 | 3 | 3 | 3 | 3 |
| Anti-aging agent-2 | 1 | 1 | 1 | 1 | 1 |
| wax | 2 | 2 | 2 | 2 | 2 |
| Stearic acid | 2 | 2 | 2 | 2 | 2 |
| Vulcanization accelerator-1 | 2 | 2 | 2 | 2 | 2 |
| Vulcanization accelerator-2 | 2.5 | 2.5 | 2.5 | 2.5 | 2.5 |
| sulfur | 1.2 | 1.2 | 1.2 | 1.2 | 1.2 |
| Parameters | | | | | |
| 30°CE* (MPa) | 9.5 | 9.2 | 9.2 | 8.8 | 9.4 |
| Tread thickness G(mm) | 8.5 | 8 | 8.5 | 8 | 8.5 |
| 30°C tan δ | 0.2 | 0.2 | 0.2 | 0.24 | 0.22 |
| AE (% by mass) | 10 | 10 | 10 | 14.5 | 10 |
| Land ratio R (%) | 65 | 65 | 68 | 65 | 65 |
| 30°CE* (MPa) x R (%) | 617.5 | 598 | 626 | 572 | 611 |
| 30°CE* (MPa) / G (mm)) | 1.12 | 1.15 | 1.15 | 1.1 | 1.11 |

(continued)

| Performance evaluation | | | | | |
|---|---|---|---|---|---|
| Steering stability after high-speed running | 132 | 136 | 140 | 130 | 138 |

[Table 4]

| Comparative Example | Comparative Example | | | | |
|---|---|---|---|---|---|
| | 1 | 2 | 3 | 4 | 5 |
| Cap rubber layer composition | | | | | |
| SBR-1 | 85 | 85 | 85 | 85 | - |
| SBR-2 | - | - | - | - | 85 |
| SBR-3 | - | - | - | - | - |
| B.R. | 15 | 15 | 15 | 15 | 15 |
| silica | 105 | 105 | 105 | 98 | 110 |
| Carbon Black | 5 | 5 | 5 | 5 | 5 |
| Silane Coupling Agent | 8.4 | 8.4 | 8.4 | 7.8 | 8.8 |
| resin | 20 | 20 | 20 | 20 | 40 |
| oil | 25 | 15 | 15 | 20 | 15 |
| Zinc oxide | 2 | 2 | 2 | 2 | 2 |
| Anti-aging agent-1 | 3 | 3 | 3 | 3 | 3 |
| Anti-aging agent-2 | 1 | 1 | 1 | 1 | 1 |
| wax | 2 | 2 | 2 | 2 | 2 |
| Stearic acid | 2 | 2 | 2 | 2 | 2 |
| Vulcanization accelerator-1 | 2 | 2 | 2 | 2 | 2 |
| Vulcanization accelerator-2 | 2.5 | 2.5 | 2.5 | 2.5 | 2.5 |
| sulfur | 1.2 | 1.2 | 1.2 | 1.2 | 1.2 |
| Parameters | | | | | |
| 30°CE * (MPa) | 7.8 | 8.5 | 8.5 | 7.7 | 6.9 |
| Tread thickness G(mm) | 9.5 | 8.5 | 9.5 | 9.5 | 9.5 |
| 30°C tan $\delta$ | 0.24 | 0.24 | 0.24 | 0.22 | 0.26 |
| AE (% by mass) | 16.2 | 13.1 | 13.1 | 15.1 | 18.7 |
| Land ratio R (%) | 65 | 65 | 65 | 65 | 65 |
| 30°CE * (MPa) x R (%) | 507 | 552 | 553 | 501 | 448 |
| 30°CE * (MPa)/G (mm)) | 0.82 | 1 | 0.84 | 0.81 | 0.72 |
| Performance evaluation | | | | | |
| Steering stability after high-speed running | 86 | 100 | 94 | 88 | 82 |

Although the present invention has been described above based on the embodiment, the present invention is not limited to the above embodiment. Various modifications can be made to the above embodiment within the same and equivalent scope of the present invention.

The present invention (1) is

a tire having a tread portion, wherein
a cap rubber layer forming the tread portion is formed from a rubber composition which contains a styrene-butadiene

rubber (SBR) having a styrene content of 25% by mass or less in an amount of 80 parts by mass or more and 100 parts by mass or less per 100 parts by mass of the rubber component, and contains silica in an amount of 100 parts by mass or less based on 100 parts by mass of the rubber component;
the rubber composition has a complex modulus (30°C E*) of more than 8.0 MPa as measured under the conditions of a temperature of 30°C, a frequency of 10 Hz, an initial strain of 5%, and a dynamic strain rate of 1%, in a deformation mode of tension; and
the thickness of the tread portion is 8.5 mm or less.

The present invention (2) is the tire according to the present invention (1), wherein the 30°CE* is more than 8.5 MPa.
The present invention (3) is the tire according to the present invention (1) , wherein the 30°CE* is more than 9.0 MPa.
The present invention (4) is the tire of any combination of the present inventions (1) to (3), wherein the thickness of the tread portion is 8.0 mm or less.
The present invention (5) is the tire of any combination of the present inventions (1) to (4), wherein the cap rubber layer has a loss tangent (30°C tan δ) measured in a deformation mode of tension under conditions of a temperature of 30°C, a frequency of 10 Hz, an initial strain of 5%, and a dynamic strain rate of 1% of 0.25 or less.
The present invention (6) is the tire according to the present invention (5), wherein the 30°C tan δ is 0.20 or less.
The present invention (7) is the tire of any combination of the present inventions (1) to (6), wherein the tread portion is multi-layered with a base rubber layer provided inside the cap rubber layer, and the thickness of the cap rubber layer is for 70% or more of the thickness of the entire tread portion.
The present invention (8) is the tire of any combination of the present inventions (1) to (7), wherein the particle diameter (average primary particle diameter) of the silica is 17 nm or less.
The present invention (9) is the tire of any combination of the present inventions (1) to (8), wherein the acetone extractables (AE) of the cap rubber layer is 20 % by mass or less.
The present invention (10) is the tire of any combination of the present inventions (1) to (9), wherein the acetone extractables (AE) of the cap rubber layer is 18% by mass or more.
The present invention (11) is the tire of any combination of the present inventions (1) to (10), wherein the land ratio in the tread portion is 60% or more.
The present invention (12) is the tire of any combination of the present inventions (1) to (11), wherein the product of the land ratio R (%) in the tread portion and the 30°C E* (MPa) is 560 or more.
The present invention (13) is the tire of any combination of the present inventions (1) to (12), wherein, when the thickness of the tread portion is G (mm), the 30°C E* (MPa) and G satisfy the following relationship:

$$30^{\circ}CE^{*}/G \geqq 1.0.$$

The present invention (14) is the tire of any combination of the present inventions (1) to (13), wherein the aspect ratio is 30% or more and 60% or less.

## Claims

1. A tire having a tread portion, wherein

   a cap rubber layer forming the tread portion is formed from a rubber composition which contains a styrene-butadiene rubber (SBR) having a styrene content of 25% by mass or less in an amount of 80 parts by mass or more and 100 parts by mass or less per 100 parts by mass of the rubber component, and contains silica in an amount of 100 parts by mass or less based on 100 parts by mass of the rubber component;
   the rubber composition has a complex modulus (30°C E*) of more than 8.0 MPa as measured under the conditions of a temperature of 30°C, a frequency of 10 Hz, an initial strain of 5%, and a dynamic strain rate of 1%, in a deformation mode of tension; and
   the thickness of the tread portion is 8.5 mm or less.

2. The tire according to claim 1, wherein the 30°CE* is more than 8.5 MPa.

3. The tire according to claim 1, wherein the 30°CE* is more than 9.0 MPa.

4. The tire according to any one of claims 1-3, wherein the thickness of the tread portion is 8.0 mm or less.

5. The tire according to any one of claims 1-4, wherein the cap rubber layer has a loss tangent (30°C tan δ) measured in a deformation mode of tension under conditions of a temperature of 30°C, a frequency of 10 Hz, an initial strain of 5%, and a dynamic strain rate of 1% of 0.25 or less.

6. The tire according to claim 5, wherein the 30°C tan δ is 0.20 or less.

7. The tire according to any one of claims 1-6, wherein the tread portion is multi-layered with a base rubber layer provided inside the cap rubber layer, and the thickness of the cap rubber layer is for 70% or more of the thickness of the entire tread portion.

8. The tire according to any one of claims 1-7, wherein the particle diameter (average primary particle diameter) of the silica is 17 nm or less.

9. The tire according to any one of claims 1-8, wherein the acetone extractables (AE) of the cap rubber layer is 20 % by mass or less.

10. The tire according to any one of claims 1-9, wherein the acetone extractables (AE) of the cap rubber layer is 18% by mass or more.

11. The tire according to any one of claims 1-10, wherein the land ratio in the tread portion is 60% or more.

12. The tire according to any one of claims 1-11, wherein the product of the land ratio R (%) in the tread portion and the 30°C E* (MPa) is 560 or more.

13. The tire according to any one of claims 1-12, wherein, when the thickness of the tread portion is G (mm), the 30°C E* (MPa) and G satisfy the following relationship: $30°CE^*/G \geqq 1.0$.

14. The tire according to any one of claims 1-13, wherein the aspect ratio is 30% or more and 60% or less.

**INTERNATIONAL SEARCH REPORT**

International application No.
**PCT/JP2023/008974**

**A. CLASSIFICATION OF SUBJECT MATTER**

***B60C 11/00***(2006.01)i; ***B60C 1/00***(2006.01)i; ***B60C 11/03***(2006.01)i; ***C08F 236/10***(2006.01)i; ***C08K 3/36***(2006.01)i; ***C08L 9/06***(2006.01)i

FI: B60C11/00 D; B60C1/00 A; B60C11/00 B; B60C11/00 F; B60C11/03 Z; C08F236/10; C08K3/36; C08L9/06

According to International Patent Classification (IPC) or to both national classification and IPC

**B. FIELDS SEARCHED**

Minimum documentation searched (classification system followed by classification symbols)

B60C1/00-19/12; C08F6/00-246/00; C08F301/00; C08K3/00-13/08; C08L1/00-101/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2017-218042 A (SUMITOMO RUBBER IND) 14 December 2017 (2017-12-14)<br>entire text | 1-14 |
| A | JP 2021-25036 A (HANKOOK TIRE & TECHNOLOGY CO., LTD.) 22 February 2021 (2021-02-22)<br>entire text | 1-14 |
| A | JP 5-178011 A (YOKOHAMA RUBBER CO LTD) 20 July 1993 (1993-07-20)<br>entire text | 1-14 |
| A | JP 2018-505809 A (COMPAGNIE GENERALE DES ETABLISSEMENTS MICHELIN) 01 March 2018 (2018-03-01)<br>entire text | 1-14 |
| A | JP 2013-1805 A (SUMITOMO RUBBER IND) 07 January 2013 (2013-01-07)<br>whole document | 1-14 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 May 2023** | **13 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/008974**

| Patent document cited in search report | Publication date (day/month/year) | Patent family member(s) | Publication date (day/month/year) |
|---|---|---|---|
| JP 2017-218042 A | 14 December 2017 | EP 3254872 A1<br>entire text<br>CN 107471922 A | |
| JP 2021-25036 A | 22 February 2021 | US 2021/0032444 A1<br>entire text<br>EP 3771728 A1<br>CN 112300459 A<br>KR 10-2162967 B1 | |
| JP 5-178011 A | 20 July 1993 | CA 2084954 A1<br>entire text | |
| JP 2018-505809 A | 01 March 2018 | US 2017/0361658 A1<br>entire text<br>WO 2016/109724 A1<br>EP 3240697 A1<br>CN 107278184 A | |
| JP 2013-1805 A | 07 January 2013 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2011093386 A
- JP 2013079017 A
- JP 2014133845 A
- JP 2016037100 A
- JP 2010111753 A
- US 4414370 B
- JP 59006207 A
- JP 5058805 B
- JP 1313522 A
- US 5010166 B

### Non-patent literature cited in the description

- *Toa Synthetic Research Annual Report TREND2000* (3), 42-45